# EUROPEAN PATENT APPLICATION

(11) **EP 3 355 187 A1**
(43) Date of publication of application: **01.08.2018**
(21) Application number: 16848028.3
(22) Date of filing: 13.09.2016
(51) Int. Cl.: G06F 9/48

(54) **LOADING METHOD AND DEVICE FOR TERMINAL APPLICATION (APP)**

(30) Priority: 21.09.2015 CN 201510603127
(71) Applicant: Alibaba Group Holding Limited, Grand Cayman (KY)
(72) Inventor: LI, Lizhong, Hangzhou 310099 (CN); ZHOU, Guanghui, Hangzhou 310099 (CN)
(74) Representative: Conroy, John
(86) International application number: PCT/CN2016/098814
(87) International publication number: WO 2017/050146

(57) **Abstract**

Embodiments of the present application disclose a method and an apparatus for loading a terminal application (APP). The method includes: receiving a first instruction for triggering a starting action on a main APP which is installed on a terminal and includes at least one sub-APP; in response to the first instruction, acquiring application loading information which corresponds to the main APP and includes identifier information about a to-be-loaded sub-APP; and according to the identifier information about the to-be-loaded sub-APP included in the acquired application loading information, determining and loading the to-be-loaded sub-APP in the process of starting the main APP. As the to-be-loaded sub-APP is determined according to the acquired application loading information, the time consumed in the application loading process can be shortened, and the speed of opening the main APP can be increased.

## Description

### Technical Field

The present application relates to the field of software technologies, and in particular, to a method and an apparatus for loading a terminal application (APP).

### Background Art

At present, multiple sub-APPs are generally nested in a certain main APP which is installed on a terminal. As such, multiple sub-APPs can be selectively loaded in an interface of a certain main APP.

In the prior art, when a user triggers a starting action on a certain main APP nested with a plurality of sub-APPs, all sub-APPs nested in the main APP are generally loaded in the process of starting the main APP. The loading process is a process in which application programs on a hard disk of a terminal are called into a memory of the terminal. For example, on the assumption that a set of sub-APPs included in a certain main APP is: {sub-APP 1, sub-APP 2, ..., sub-APP n}, the terminal can load the sub-APP 1, the sub-APP 2, ..., and the sub-APP n in sequence when a user triggers a starting action on the main APP.

During the implementation of the present application, the inventors found at least the following problem in the prior art:
As all sub-APPs included in a certain main APP need to be loaded in sequence in the process of starting the main APP, it would be inevitable that the loading process is relatively time-consuming and the process of opening the main APP is slow.

### Summary of the Invention

An objective of embodiments of the present application is to provide a method and an apparatus for loading a terminal APP, to solve the problem in the prior art that the loading process is relatively time-consuming and the process of opening the main APP is slow.

To solve the foregoing technical problem, the method and the apparatus for loading a terminal APP provided in the embodiments of the present application are implemented as follows:
A method for loading a terminal APP, including:
receiving a first instruction for triggering a starting action on a main APP which is installed on a terminal and includes at least one sub-APP;
in response to the first instruction, acquiring application loading information which corresponds to the main APP and includes identifier information about a to-be-loaded sub-APP; and
according to the identifier information about the to-be-loaded sub-APP included in the acquired application loading information, determining and loading the to-be-loaded sub-APP in the process of starting the main APP.

An apparatus for loading a terminal APP, including:
a receiving module configured to receive an instruction for triggering a starting action on a main APP which is installed on a terminal and includes at least one sub-APP;
an acquisition module configured to acquire application loading information which corresponds to the main APP and includes identifier information about a to-be-loaded sub-APP in response to the instruction; and
a loading module configured to determine and load the to-be-loaded sub-APP in the process of starting the main APP, according to the identifier information about the to-be-loaded sub-APP included in the acquired application loading information.

It can be seen from the technical solutions provided in the embodiments of the present application that, after a first instruction for triggering a starting action on a main APP is received, application loading information which corresponds to the main APP is acquired, a to-be-loaded sub-APP is determined by analyzing the application loading information, and then the determined to-be-loaded sub-APP is loaded in the process of starting the main APP. In the foregoing process, as the to-be-loaded sub-APP is determined according to the acquired application loading information, the time consumed in the application loading process can be shortened and the speed of opening the main APP can be increased compared with the loading of all sub-APPs included in a main APP in the prior art.

### Brief Description of the Drawings

To illustrate the technical solutions according to the embodiments of the present application or in the prior art more clearly, the accompanying drawings for describing the embodiments or the prior art are introduced briefly in the following. It is apparent that the accompanying drawings in the following description are only some embodiments of the present application. Those of ordinary skill in the art can obtain other drawings according to the accompanying drawings without creative efforts.
FIG. 1 is a schematic interface diagram of a main APP on a terminal and sub-APPs included in the main APP according to an embodiment of the present application;
FIG. 2 is a flowchart of a method for loading a terminal APP according to a first embodiment of the present application;
FIG. 3 is a flowchart of loading a sub-APP in a main APP in a method for loading a terminal APP according to an embodiment of the present application;
FIG. 4 is a flowchart of a method for loading a terminal APP according to a second embodiment of the present application;
FIG. 5 is a flowchart of a method for loading a terminal APP according to a third embodiment of the present application;
FIG. 6 is a module diagram of an apparatus for loading a terminal APP according to the first embodiment of the present application;
FIG. 7 is a module diagram of an apparatus for loading a terminal APP according to the second embodiment of the present application;
FIG. 8 is a module diagram of an apparatus for loading a terminal APP according to the third embodiment of the present application; and
FIG. 9 is a module diagram of an apparatus for loading a terminal APP according to a fourth embodiment of the present application.

### Detailed Description

To make those skilled in the art better understand the technical solutions in the present application, the technical solutions in the embodiments of the present application will be clearly and completely described in the following with reference to the accompanying drawings in the embodiments of the present application. It is apparent that the embodiments described are merely some of rather than all the embodiments of the present application. All other embodiments obtained by those of ordinary skill in the art based on the embodiments in the present application without creative efforts should be encompassed in the protection scope of the present application.

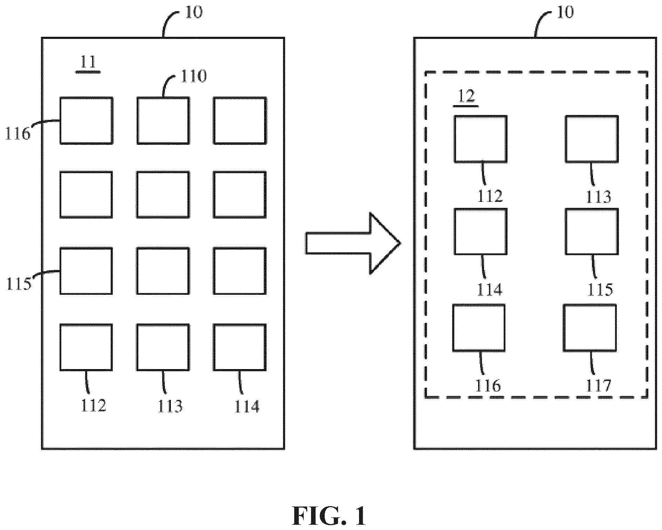

As shown in FIG. 1, it is a schematic interface diagram of a main APP on a terminal and sub-APPs included in the main APP. A main interface 11 of a terminal 10 includes icons of APPs which are installed on the terminal 10. The icons of the APPs may be icons of a main APP which include multiple sub-APPs, and may also be icons of independent APPs which do not include sub-APPs. When a user that uses the terminal 10 triggers a starting action on a main APP (the starting action may be triggered by the user by touching an icon 110 of the main APP with a finger), the terminal switches from the main interface 11 to an interface 12 of the main APP. It can be seen that the interface 12 of the main APP (that is, the APP corresponding to the icon 110) includes icons 112, 113, 114, 115, 116, and 117 of multiple sub-APPs that can run in the main APP, and the user may load the sub-APPs on the interface 12 of the main APP by tapping the icons of the sub-APPs. It is worth mentioning that FIG. 1 merely illustrates some sub-APPs exemplarily, and the number of sub-APPs included in the main APP is not limited to that shown in FIG. 1.

The terminal device may be a tablet computer, a smart phone, a smart watch, or other computer apparatuses and communication apparatuses. The terminal devices (or referred to as client devices) all architecturally include some basic components, for example, a bus, a processing apparatus, a storage apparatus, one or more input/output apparatuses, a communication interface, and so on. The bus may include one or more wires for implementing communication between a server and various components of a terminal. The processing apparatus may include various types of processors or micro-processors that are configured to execute instructions and process processes or threads. The storage apparatus may include a dynamic memory configured to store dynamic information, for example, a random access memory (RAM), or a static memory configured to store static information, for example, a read-only memory (ROM), and a large-capacity memory that includes magnetic or optical recording media and corresponding drivers. The input apparatus may be a keyboard, a mouse, a stylus, a touch screen, a voice recognition apparatus, a biometric apparatus, or the like. The output apparatus may be a display, a printer, a speaker or the like that is configured to output information. The communication interface is used to enable a server or a client device to communicate with another system or apparatus. The communication interface may be connected to the networks by means of wired connection, wireless connection or optical connection. Each network may include a local area network (LAN), a wide area network (WAN), an Intranet, the Internet, a mobile phone network, a virtual private network (VPN), a cellular mobile communication network or other mobile communication networks, Bluetooth, NFC or any combination thereof. The terminal device includes operating system software that is used to manage system resources and control running of other programs, and application software or program instructions that are used to implement specific functions.

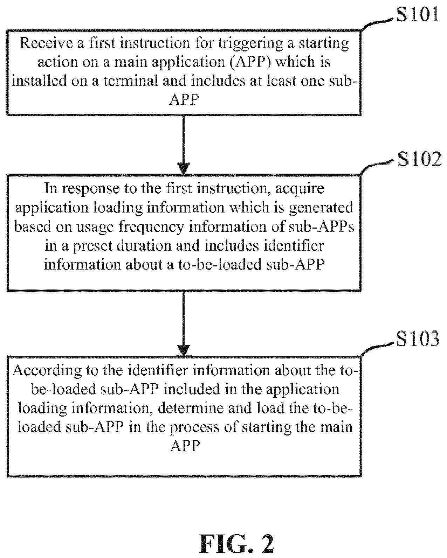

FIG. 2 is a flowchart of a method for loading a terminal APP according to a first embodiment of the present application. With reference to FIG. 1 and FIG. 2, the method for loading a terminal APP in this embodiment includes:
S101: A first instruction for triggering a starting action on a main APP which is installed on a terminal and includes at least one sub-APP is received.

Specifically, a user may touch a designated area of a touch screen of a terminal with a finger. The designated area is the location of the icon 110 of the main APP. The terminal receives a first instruction of the user for triggering a starting action on the main APP by sensing the user's action of tapping the icon 110 of the main APP.

S102: In response to the first instruction, application loading information is acquired, which is generated based on usage frequency information of sub-APPs in a preset duration and includes identifier information about a to-be-loaded sub-APP.

In this embodiment, after the user triggers a starting action on a certain main APP, a sub-APP to be loaded in the process of starting the main APP needs to be determined. In this embodiment, the terminal may read the application loading information from a certain directory of the terminal after receiving the first instruction. The application loading information may indicate which sub-APPs should be loaded in the process of starting the main APP.

The application loading information may be generated based on usage frequency information of sub-APPs in a preset duration. The usage frequency information is used to represent how often the sub-APPs are used. For example, a set of sub-APPs included in an interface 12 of a certain main APP (an APP corresponding to the icon 110) is: {a first sub-APP, a second sub-APP, a third sub-APP, a fourth sub-APP, a fifth sub-APP, a sixth sub-APP}. The first sub-APP corresponds to the icon 112, the second sub-APP corresponds to the icon 113, the third sub-APP corresponds to the icon 114, the fourth sub-APP corresponds to the icon 115, the fifth sub-APP corresponds to the icon 116, and the sixth sub-APP corresponds to the icon 117. As stated above, suppose that a preset duration for conducting statistics on usage frequency information is a time length of one week, the following information is obtained by statistical analysis:
the usage frequency information of the first sub-APP in the past one week was: 3.2 times per day;
the usage frequency information of the second sub-APP in the past one week was: 8.5 times per day;
the usage frequency information of the third sub-APP in the past one week was: 4.3 times per day;
the usage frequency information of the fourth sub-APP in the past one week was: 5.5 times per day;
the usage frequency information of the fifth sub-APP in the past one week was: 1.2 times per day; and
the usage frequency information of the sixth sub-APP in the past one week was: 0.5 times per day.

Then, the usage frequency information of the sub-APPs in a preset duration (e.g., one week) obtained based on the above statistical analysis may be sorted in a descending order, and one or more sub-APPs used relatively frequently is or are determined as a to-be-loaded sub-APP or to-be-loaded sub-APPs in the process of starting the main APP. Definitely, the to-be-loaded sub-APP or sub-APPs may be pre-determined on the terminal based on usage frequency information acquired periodically, and the application loading information which can be read by the terminal may be generated correspondingly.

In the embodiment of the present application, the application loading information may include identifier information about to-be-loaded sub-APPs. For example, if it is determined that the to-be-loaded sub-APPs are the second sub-APP (the APP corresponding to the icon 113) and the fourth sub-APP (the APP corresponding to the icon 115), the application loading information may carry identifier information about the second sub-APP and identifier information about the fourth sub-APP. The identifier information may be an APP name, an APP number, or the like.

In some embodiments of the present application, before the application loading information is acquired, the application loading information may be generated by performing the following steps:
a1) Request information for acquiring usage frequency information is sent to a server side.
   For sub-APPs installed on a terminal (client side), statistics on usage frequency information indicating how often users use the sub-APPs in a preset duration may be conducted on server sides of the sub-APPs. Correspondingly, a server side may record the number of times a user logs in to an APP account or record the number of times the user accesses data on the server side. Generally, the terminal may send to the server side request information for requesting acquisition of usage frequency information of sub-APPs included in a certain main APP. The request information may carry a user ID, a preset duration, identifier information about the main APP, and so on. It is worth mentioning that the terminal may send the request information to a server side of the main APP in some embodiments. Then, the server of the main APP collects the usage frequency information from server sides of the sub-APPs.
a2) In response to the request information, usage frequency information of sub-APPs included in the main APP in a preset duration is received from the server side.
   The server side feeds back to the terminal the usage frequency information which is obtained by statistics and indicates how often the user used the sub-APPs in a past preset duration.
a3) The received usage frequency information is sorted in a descending order, and a sub-APP whose usage frequency information is sorted at the forefront is determined as the to-be-loaded sub-APP.
   As stated above, sorting may be performed based on the usage frequency information, and the sub-APP sorted at the forefront (indicating that the sub-APP is used relatively frequently) is taken as the to-be-loaded sub-APP. The number of to-be-loaded sub-APPs needing to be determined may be selected or determined by the user, and may also be determined by the terminal based on the total number of sub-APPs included in the main APP (for example, it is determined that the number of the to-be-loaded sub-application (APP) is half of the total number).
a4) Application loading information which includes identifier information about the to-be-loaded sub-APP is generated and stored in a designated directory of the terminal.

The application loading information may be written into a certain readable file, and the file is stored in a designated directory of the main APP.

In another embodiment of the present application, before the application loading information is acquired, the application loading information may be generated by performing the following steps:
b1) Usage frequency information of sub-APPs included in the main APP in a preset duration is acquired from an installation directory of the main APP of the terminal.
b2) The received usage frequency information is sorted in a descending order, and a sub-APP whose usage frequency information is sorted at the forefront is determined as the to-be-loaded sub-APP.
b3) Application loading information which includes identifier information about the to-be-loaded sub-APP is generated and stored in a designated directory of the terminal.

In the foregoing process, the terminal may monitor data of the user's behaviors of using the main APP and sub-APPs included in the main APP, conduct statistics to obtain usage frequency information indicating how often the user uses the sub-APPs, and store the usage frequency information in a local storage space of the terminal. The terminal may periodically read the usage frequency information from the local storage space and generate a readable file which includes application loading information.

S103: The to-be-loaded sub-APP is determined and loaded in the process of starting the main APP according to the identifier information about the to-be-loaded sub-APP included in the acquired application loading information.

In step S103, based on the acquired file pre-written into the application loading information, the terminal may obtain to-be-loaded sub-APPs by analysis, and load the determined sub-APPs in the process of starting the main APP. For example, if the determined to-be-loaded sub-APPs are the second APP and the fourth APP, only these two APPs need to be loaded in the process of starting the main APP, thus avoiding the drawback in the prior art that the loading time is long and the speed of opening the main APP is slow, since all sub-APPs included in a certain main APP need to be loaded at a time in the process of starting the main APP.

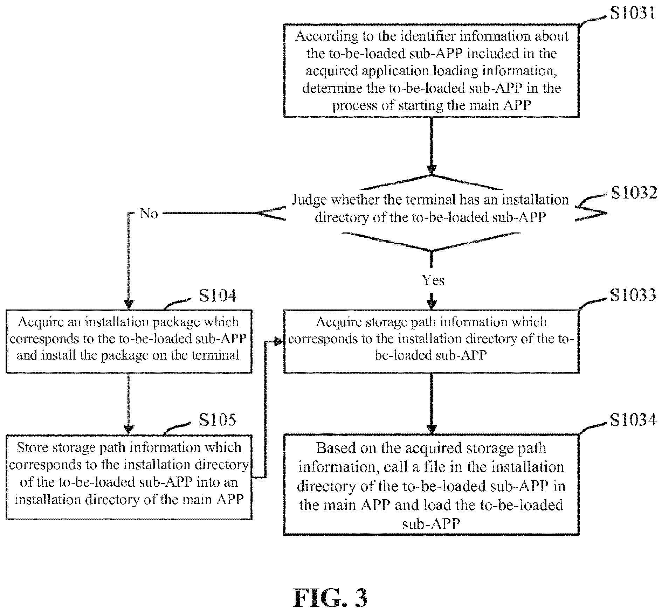

FIG. 3 is a flowchart of loading a sub-APP in a main APP in a method for loading a terminal APP according to an embodiment of the present application. In this embodiment, the process of loading a sub-APP in a main APP specifically includes:
S1031: The to-be-loaded sub-APP is determined in the process of starting the main APP according to the identifier information about the to-be-loaded sub-APP included in the acquired application loading information.
S1032: It is judged whether the terminal has an installation directory of the to-be-loaded sub-APP.

In the embodiment of the present application, the sub-APPs included in the main APP may be packaged into an independent APP and installed on the terminal. Continuing to refer to FIG. 1, in addition to the icon 110 of the main APP, the main interface 11 of the terminal also includes icons 112, 113, 114, 115, and 116 of the sub-APPs included in the main APP. That is to say, the sub-APPs may be independently installed on the terminal 10. Upon completion of installation, the terminal 10 has installation directories respectively corresponding to the sub-APPs, and installation files of the sub-APPs are stored in the installation directories. Finally, the terminal may scan a storage space to determine whether the storage space of the terminal has an installation directory which corresponds to the to-be-loaded sub-APP.

S1033: If the storage space of the terminal has an installation directory which corresponds to the to-be-loaded sub-APP, storage path information which corresponds to the installation directory of the to-be-loaded sub-APP is acquired.

In this embodiment, after a certain sub-APP is installed successfully, a file may be stored in a certain designated path under an installation directory of a main APP which corresponds to the sub-APP. The file may be written into the storage path information which corresponds to the installation directory of the to-be-loaded sub-APP. As such, after the starting action on the main APP is triggered, the main APP may read the file written into the storage path information which corresponds to the installation directory of the to-be-loaded sub-APP to acquire storage path information which corresponds to an installation directory of a sub-APP to be loaded currently. For example, storage path information which corresponds to an installation directory of the first sub-APP (which corresponds to the icon 112) is: Program Files/app1/a, and an installation directory of the main APP is: Program Files/app; then the storage path information may be written into a certain file, and the file is stored in the installation directory of the main APP: Program Files/app.

S1034: Based on the acquired storage path information, a file in the installation directory of the to-be-loaded sub-APP is called in the main APP and the to-be-loaded sub-APP is loaded.

In the embodiment of the present application, after the storage path information of the to-be-loaded sub-APP is acquired, the main APP calls resources of the to-be-loaded sub-APP through the storage path. That is to say, the terminal may reuse an installation file in an installation directory of a certain sub-APP in the framework of a current main APP to implement loading of the to-be-loaded sub-APP in the main APP. Definitely, when the main APP is not started, the user may also run sub-APPs independently by tapping icons of the sub-APPs in the main interface 11.

S104: If the terminal does not have an installation directory of the to-be-loaded sub-APP, an installation package which corresponds to the to-be-loaded sub-APP is acquired and installed on the terminal.

For example, it is finally determined that the to-be-loaded sub-APP includes the sixth sub-APP (the APP corresponding to the icon 117), and suppose that the icon of the sixth sub-APP does not exist in the main interface 11 of the terminal, it may indicate that the sixth sub-APP is not installed on the terminal currently (that is, an installation directory of the to-be-loaded sub-APP does not exist); in this case, the terminal may push to the user request information asking whether the sixth sub-APP needs to be downloaded and installed, if the user agrees to download and install the sixth sub-APP, the terminal may acquire and download an installation package of the sixth sub-APP from the Internet and install the package on the terminal.

S105: Storage path information which corresponds to the installation directory of the to-be-loaded sub-APP is stored in an installation directory of the main APP.

As stated above, upon completion of installation of a certain sub-APP, storage path information which corresponds to an installation directory of the sub-APP may be written into a certain file and the file may be stored in an installation directory of the main APP. As such, in the process of subsequently triggering the starting action on the main APP by the user, the storage path information which corresponds to the sub-APP may be found, and resources in the installation directory of the sub-APP are called according to the storage path information.

In the embodiment of the present application, the method further includes:
A second instruction for triggering a starting action on a first sub-APP which is included in the main APP is received.

In response to the second instruction, it is judged whether the first sub-APP is a sub-APP loaded in the process of starting the main APP.

If the first sub-APP is not a sub-APP loaded in the process of starting the main APP, it is judged whether the terminal has an installation directory of the first sub-APP.

If the terminal does not have an installation directory which corresponds to the first sub-APP, an installation package which corresponds to the first sub-APP is acquired and installed on the terminal; and storage path information which corresponds to the installation directory of the to-be-loaded first sub-APP is stored in an installation directory of the main APP.

If the terminal has an installation directory which corresponds to the first sub-APP, storage path information which corresponds to the installation directory of the to-be-loaded first sub-APP is acquired; and based on the acquired storage path information, a file in the installation directory of the to-be-loaded first sub-APP is called in the main APP and the to-be-loaded first sub-APP is loaded.

In combination with a specific application scenario, the foregoing process may be as follows: after a user opens an interface of a certain main APP, a starting action on a certain sub-APP may be triggered by tapping an icon of the certain sub-APP in the interface of the main APP. Afterwards, the terminal may scan a storage space of the terminal to judge whether an installation directory of the to-be-started sub-APP has existed in the storage space (judge whether the sub-APP has been installed), and if the installation directory does not exist, an installation package of the sub-APP is downloaded via the Internet and the sub-APP is installed as an independent APP, and at the same time, storage path information of the sub-APP is written into a particular file. The particular file is stored under an installation directory of the main APP. On the other hand, if it is found by scanning that the installation directory of the to-be-started sub-APP exists in the storage space, storage path information of the sub-APP in the installation directory of the main APP is read to call an installation file under the installation directory of the sub-APP, such that the sub-APP in the main APP can be started by means of resource reuse.

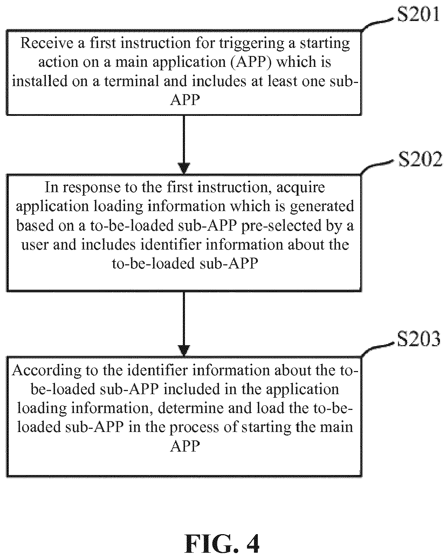

FIG. 4 is a flowchart of a method for loading a terminal APP according to a second embodiment of the present application. The method for loading a terminal APP in this embodiment includes:
S201: A first instruction for triggering a starting action on a main APP which is installed on a terminal and includes at least one sub-APP is received.

Reference may be made to the content of step S101 in FIG. 2.

S202: In response to the first instruction, application loading information which corresponds to the main APP and includes identifier information about a to-be-loaded sub-APP is acquired.

In this embodiment, step S202 is different from step S102 in the previous embodiment in that the application loading information may be generated based on a to-be-loaded sub-APP selected by a user. For example, the user may use a loading setting function of the main APP to select several sub-APPs needing to be loaded to serve as objects needing to be loaded in the process of starting the main APP. For example, the user may select a first sub-APP and a second sub-APP which are used relatively frequently in daily life as to-be-loaded sub-APPs.

S203: The to-be-loaded sub-APP is determined and loaded in the process of starting the main APP according to the identifier information about the to-be-loaded sub-APP included in the acquired application loading information.

Reference may be made to the content of step S103 in FIG. 2.

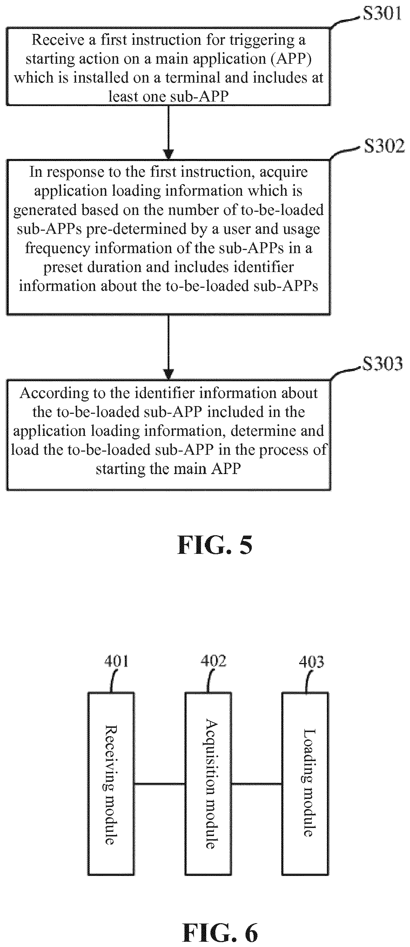

FIG. 5 is a flowchart of a method for loading a terminal APP according to a third embodiment of the present application. The method for loading a terminal APP in this embodiment includes:
S301: A first instruction for triggering a starting action on a main APP which is installed on a terminal and includes at least one sub-APP is received.

Reference may be made to the content of step S101 in FIG. 2.

S302: In response to the first instruction, application loading information is acquired, which is generated based on the number of to-be-loaded sub-APPs pre-determined by a user and usage frequency information of the sub-APPs in a preset duration and includes identifier information about the to-be-loaded sub-APPs.

Compared with the above embodiment, step S302 in this embodiment is different in that the user may determine the number of to-be-loaded sub-APPs (e.g., 3) by using a setting function of the main APP, and then the terminal periodically acquires usage frequency information of the sub-APPs. Suppose that the sub-APPs are sorted according to the usage frequency information, and the sub-APPs are finally ranked as: the second sub-APP > the fourth sub-APP > the first sub-APP > the fifth sub-APP > the third sub-APP > the sixth sub-APP. Three to-be-loaded sub-APPs finally obtained are the second sub-APP, the fourth sub-APP, and the first sub-APP, respectively, and then the application loading information is generated and stored in a storage space of the terminal.

S303: The to-be-loaded sub-APP is determined and loaded in the process of starting the main APP according to the identifier information about the to-be-loaded sub-APP included in the acquired application loading information.

Reference may be made to the content of step S103 in FIG. 2.

It can be seen from the technical solutions provided in the embodiments of the present application that, after a first instruction for triggering a starting action on a main APP is received, application loading information which corresponds to the main APP is acquired, a to-be-loaded sub-APP is determined by analyzing the application loading information, and then the determined to-be-loaded sub-APP is loaded in the process of starting the main APP. In the foregoing process, as the to-be-loaded sub-APP is determined according to the acquired application loading information, compared with the loading of all sub-APPs included in a main APP in the prior art, the time consumed in the application loading process can be shortened, and the speed of opening the main APP can be increased. In addition, the terminal may call resources (files) in an installation directory of a sub-APP in the main APP according to the embodiments of the present application, while in the prior art, when a user opens a certain sub-APP in a main APP, it is common to directly run a to-be-started sub-APP (an APP installed independently). Therefore, the embodiments of the present application can reduce consumption of resources of the terminal as compared with the prior art.

The technical solution of an apparatus for loading a terminal APP according to an embodiment of the present application will be introduced in the following. The apparatus is based on the principle of the foregoing method, and thus reference may be made to the embodiments of the foregoing method for the specific technical content thereof.

FIG. 6 is a module diagram of an apparatus for loading a terminal APP according to the first embodiment of the present application. The apparatus includes:
a receiving module 401 configured to receive an instruction for triggering a starting action on a main APP which is installed on a terminal and includes at least one sub-APP;
an acquisition module 402 configured to, in response to the instruction, acquire application loading information which corresponds to the main APP and includes identifier information about a to-be-loaded sub-APP; and
a loading module 403 configured to determine and load the to-be-loaded sub-APP in the process of starting the main APP, according to the identifier information about the to-be-loaded sub-APP included in the acquired application loading information.

In the embodiment of the present application, the acquisition module 402 is specifically configured to:
acquire application loading information which is generated based on usage frequency information of the sub-APP in a preset duration and includes identifier information about a to-be-loaded sub-APP; or
acquire application loading information which is generated based on a to-be-loaded sub-APP pre-selected by a user and includes identifier information about the to-be-loaded sub-APP; or
acquire application loading information which is generated based on the number of to-be-loaded sub-APPs pre-determined by a user and usage frequency information of the sub-APPs in a preset duration and includes identifier information about the to-be-loaded sub-APPs.

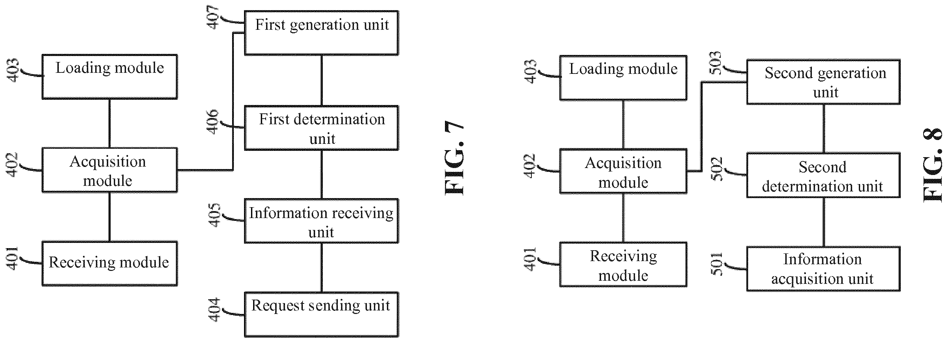

FIG. 7 is a module diagram of an apparatus for loading a terminal APP according to the second embodiment of the present application. In this embodiment, the apparatus further includes:
a request sending unit 404 configured to send request information for acquiring usage frequency information to a server side;
an information receiving unit 405 configured to, in response to the request information, receive usage frequency information of sub-APPs sent by the server side and included in the main APP in a preset duration;
a first determination unit 406 configured to sort the received usage frequency information in a descending order, and determine a sub-APP whose usage frequency information is sorted at the forefront as the to-be-loaded sub-APP; and
a second determination unit 407 configured to generate application loading information which includes identifier information about the to-be-loaded sub-APP and store the application loading information in a designated directory of the terminal; and
the acquisition module 402 is specifically configured to:
read from the designated directory of the terminal the application loading information which corresponds to the main APP and includes the identifier information about the to-be-loaded sub-APP.

FIG. 8 is a module diagram of an apparatus for loading a terminal APP according to the third embodiment of the present application. In this embodiment, the apparatus further includes:
an information acquisition unit 501 configured to acquire usage frequency information of sub-APPs included in the main APP in a preset duration from an installation directory of the main APP of the terminal;
a second determination unit 502 configured to sort the received usage frequency information in a descending order, and determine a sub-APP whose usage frequency information is sorted at the forefront as the to-be-loaded sub-APP; and
a second generation unit 503 configured to generate application loading information which includes identifier information about the to-be-loaded sub-APP and store the application loading information in a designated directory of the terminal; and
the acquisition module 402 is specifically configured to:
read from the designated directory of the terminal the application loading information which corresponds to the main APP and includes the identifier information about the to-be-loaded sub-APP.

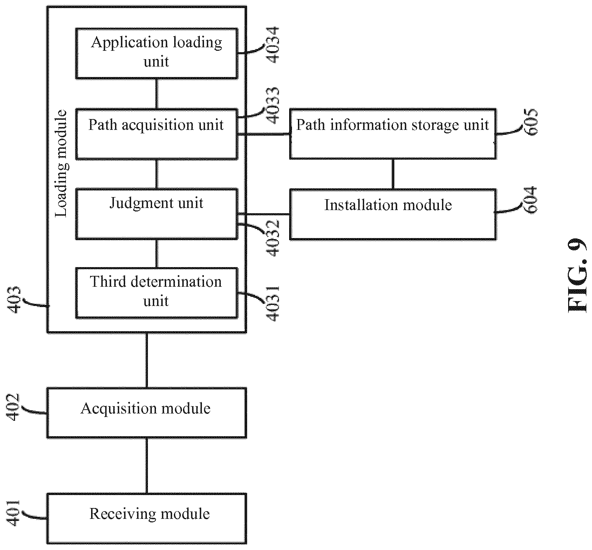

FIG. 9 is a module diagram of an apparatus for loading a terminal APP according to a fourth embodiment of the present application. In this embodiment, the loading module 403 includes:
a third determination unit 4031 configured to determine the to-be-loaded sub-APP in the process of starting the main APP, according to the identifier information about the to-be-loaded sub-APP included in the acquired application loading information;
a judgment unit 4032 configured to judge whether the terminal has an installation directory of the to-be-loaded sub-APP;
a path acquisition unit 4033 configured to acquire storage path information which corresponds to the installation directory of the to-be-loaded sub-APP when the terminal has an installation directory of the to-be-loaded sub-APP; and
an application loading unit 4034 configured to, based on the acquired storage path information, call a file in the installation directory of the to-be-loaded sub-APP in the main APP and load the to-be-loaded sub-APP.

In the embodiment of the present application, the apparatus further includes:
an installation module 604 configured to acquire an installation package which corresponds to the to-be-loaded sub-APP and install the package on the terminal if the terminal does not have an installation directory of the to-be-loaded sub-APP; and
a path information storage unit 605 configured to store storage path information which corresponds to the installation directory of the to-be-loaded sub-APP into an installation directory of the main APP.

For ease of description, when the apparatus is described, it is divided into various units in terms of functions for descriptions. Definitely, when the present application is implemented, the functions of the units may be implemented in the same or multiple software and/or hardware.

Those skilled in the art should understand that the embodiments of the present invention may be provided as a method, a system, or a computer program product. Therefore, the present invention may be implemented in the form of a complete hardware embodiment, a complete software embodiment, or an embodiment combining software and hardware. Moreover, the present invention may be in the form of a computer program product implemented on one or more computer usable storage media (including, but not limited to, a magnetic disk memory, a CD-ROM, an optical memory, and the like) including computer usable program codes.

The present invention is described with reference to flowcharts and/or block diagrams according to the method, the device (system) and the computer program product of the embodiments of the present invention. It should be understood that a computer program instruction may be used to implement each process and/or block in the flowcharts and/or block diagrams and combinations of processes and/or blocks in the flowcharts and/or block diagrams. The computer program instructions may be provided to a universal computer, a dedicated computer, an embedded processor or a processor of other programmable data processing devices to generate a machine, such that the computer or the processor of other programmable data processing devices executes an instruction to generate an apparatus which is configured to implement functions designated in one or more processes in a flowchart and/or one or more blocks in a block diagram.

The computer program instructions may also be stored in a computer readable storage that can guide the computer or other programmable data processing devices to work in a specific manner, such that the instruction stored in the computer readable storage generates an article of manufacture including an instruction apparatus, and the instruction apparatus implements functions designated by one or more processes in a flowchart and/or one or more blocks in a block diagram.

The computer program instructions may also be installed in a computer or other programmable data processing devices, such that a series of operation steps are executed on the computer or other programmable devices to generate a computer implemented processing, and therefore, the instruction executed in the computer or other programmable devices provides steps for implementing functions designated in one or more processes in a flowchart and/or one or more blocks in a block diagram.

It should be further noted that the terms "include", "comprise" or other variations thereof are intended to cover non-exclusive inclusion, so that a process, method, commodity or device including a series of elements not only includes the elements, but also includes other elements not clearly listed, or further includes inherent elements of the process, method, commodity or device. In the absence of more limitations, an element defined by "including a/an..." does not exclude that the process, method, commodity or device including the element further has other identical elements.

Those skilled in the art should understand that the embodiments of the present application may be provided as a method, a system, or a computer program product. Therefore, the present application may be implemented in the form of a complete hardware embodiment, a complete software embodiment, or an embodiment combining software and hardware. Moreover, the present application may be in the form of a computer program product implemented on one or more computer usable storage media (including, but not limited to, a magnetic disk memory, a CD-ROM, an optical memory, and the like) including computer usable program codes.

The present application may be described in a common context of a computer executable instruction executed by a computer, for example, a program module. Generally, the program module includes a routine, a program, an object, an assembly, a data structure, and the like for executing a specific task or implementing a specific abstract data type. The present application may also be practiced in a distributed computing environment, in which a task is executed by using remote processing devices connected through a communications network. In the distributed computer environment, the program module may be located in a local and remote computer storage medium including a storage device.

The embodiments in the specification are described progressively, identical or similar parts of the embodiments may be obtained with reference to each other, and each embodiment emphasizes a part different from other embodiments. Especially, the system embodiment is basically similar to the method embodiment, so it is described simply. For related parts, refer to the descriptions of the parts in the method embodiment.

The above descriptions are merely embodiments of the present application, but are not intended to limit the present application. For those skilled in the art, the present application may have various modifications and changes. Any modification, equivalent replacement, improvement and the like made within the spirit and principle of the present application should all be included in the scope of the claims of the present application.

## Claims

1. A method for loading a terminal application (APP), comprising:
receiving a first instruction for triggering a starting action on a main APP which is installed on a terminal and includes at least one sub-APP;
in response to the first instruction, acquiring application loading information which corresponds to the main APP and includes identifier information about a to-be-loaded sub-APP; and
according to the identifier information about the to-be-loaded sub-APP included in the acquired application loading information, determining and loading the to-be-loaded sub-APP in the process of starting the main APP.

2. The method according to claim 1, wherein the step of acquiring application loading information which corresponds to the main APP and includes identifier information about a to-be-loaded sub-APP comprises:
acquiring application loading information which is generated based on usage frequency information of the sub-APP in a preset duration and includes identifier information about a to-be-loaded sub-APP; or
acquiring application loading information which is generated based on a to-be-loaded sub-APP pre-selected by a user and includes identifier information about the to-be-loaded sub-APP; or
acquiring application loading information which is generated based on the number of to-be-loaded sub-APPs pre-determined by a user and usage frequency information of the sub-APPs in a preset duration and includes identifier information about the to-be-loaded sub-APPs.

3. The method according to claim 1, wherein before the step of acquiring application loading information which corresponds to the main APP and includes identifier information about a to-be-loaded sub-APP, the method further comprises:
sending request information for acquiring usage frequency information to a server side;
in response to the request information, receiving usage frequency information of sub-APPs sent by the server side and included in the main APP in a preset duration ;
sorting the received usage frequency information in a descending order, and determining a sub-APP whose usage frequency information is sorted at the forefront as the to-be-loaded sub-APP; and
generating application loading information which includes the identifier information about the to-be-loaded sub-APP and storing the application loading information in a designated directory of the terminal; and
the step of acquiring application loading information which corresponds to the main APP and includes identifier information about a to-be-loaded sub-APP comprises:
reading from the designated directory of the terminal the application loading information which corresponds to the main APP and includes the identifier information about the to-be-loaded sub-APP.

4. The method according to claim 1, wherein before the step of acquiring application loading information which corresponds to the main APP and includes identifier information about a to-be-loaded sub-APP, the method further comprises:
acquiring usage frequency information of sub-APPs included in the main APP in a preset duration from an installation directory of the main APP of the terminal;
sorting the received usage frequency information in a descending order, and determining a sub-APP whose usage frequency information is sorted at the forefront as the to-be-loaded sub-APP; and
generating application loading information which includes the identifier information about the to-be-loaded sub-APP and storing the application loading information in a designated directory of the terminal; and
the step of acquiring application loading information which corresponds to the main APP and includes identifier information about a to-be-loaded sub-APP comprises:
reading from the designated directory of the terminal the application loading information which corresponds to the main APP and includes the identifier information about the to-be-loaded sub-APP.

5. The method according to claim 1, wherein the step of according to the identifier information about the to-be-loaded sub-APP included in the acquired application loading information, determining and loading the to-be-loaded sub-APP in the process of starting the main APP comprises:
according to the identifier information about the to-be-loaded sub-APP included in the acquired application loading information, determining the to-be-loaded sub-APP in the process of starting the main APP;
judging whether the terminal has an installation directory of the to-be-loaded sub-APP;
if yes, acquiring storage path information which corresponds to the installation directory of the to-be-loaded sub-APP; and
based on the acquired storage path information, calling a file in the installation directory of the to-be-loaded sub-APP in the main APP and loading the to-be-loaded sub-APP.

6. The method according to claim 1, wherein the method further comprises:
acquiring an installation package which corresponds to the to-be-loaded sub-APP and installing the package on the terminal if the terminal does not have an installation directory of the to-be-loaded sub-APP; and
storing storage path information which corresponds to the installation directory of the to-be-loaded sub-APP into an installation directory of the main APP.

7. The method according to claim 1, wherein the method further comprises:
receiving a second instruction for triggering a starting action on a first sub-APP which is included in the main APP;
in response to the second instruction, judging whether the first sub-APP is a sub-APP loaded in the process of starting the main APP;
judging whether the terminal has an installation directory of the first sub-APP if the first sub-APP is not a sub-APP loaded in the process of starting the main APP;
acquiring an installation package which corresponds to the first sub-APP and installing the package on the terminal if the terminal does not have the installation directory of the first sub-APP; and storing storage path information which corresponds to the installation directory of the to-be-loaded first sub-APP into an installation directory of the main APP; and
acquiring storage path information which corresponds to the installation directory of the to-be-loaded first sub-APP if the terminal has the installation directory of the first sub-APP; and based on the acquired storage path information, calling a file in the installation directory of the to-be-loaded first sub-APP in the main APP and loading the to-be-loaded first sub-APP.

8. An apparatus for loading a terminal application (APP), comprising:
a receiving module configured to receive an instruction for triggering a starting action on a main APP which is installed on a terminal and includes at least one sub-APP;
an acquisition module configured to, in response to the instruction, acquire application loading information which corresponds to the main APP and includes identifier information about a to-be-loaded sub-APP; and
a loading module configured to determine and load the to-be-loaded sub-APP in the process of starting the main APP, according to the identifier information about the to-be-loaded sub-APP included in the acquired application loading information.

9. The apparatus according to claim 8, wherein the acquisition module is specifically configured to:
acquire application loading information which is generated based on usage frequency information of the sub-APP in a preset duration and includes identifier information about a to-be-loaded sub-APP; or
acquire application loading information which is generated based on a to-be-loaded sub-APP pre-selected by a user and includes identifier information about the to-be-loaded sub-APP; or
acquire application loading information which is generated based on the number of to-be-loaded sub-APPs pre-determined by a user and usage frequency information of the sub-APPs in a preset duration and includes identifier information about the to-be-loaded sub-APPs.

10. The apparatus according to claim 8, wherein the apparatus further comprises:
a request sending unit configured to send request information for acquiring usage frequency information to a server side;
an information receiving unit configured to, in response to the request information, receive usage frequency information of sub-APPs sent by the server side and included in the main APP in a preset duration;
a first determination unit configured to sort the received usage frequency information in a descending order, and determine a sub-APP whose usage frequency information is sorted at the forefront as the to-be-loaded sub-APP; and
a first generation unit configured to generate application loading information which includes the identifier information about the to-be-loaded sub-APP and store the application loading information in a designated directory of the terminal; and
the acquisition module is specifically configured to:
read from the designated directory of the terminal the application loading information which corresponds to the main APP and includes the identifier information about the to-be-loaded sub-APP.

11. The apparatus according to claim 8, wherein the apparatus further comprises:
an information acquisition unit configured to acquire usage frequency information of sub-APPs included in the main APP in a preset duration from an installation directory of the main APP of the terminal;
a second determination unit configured to sort the received usage frequency information in a descending order, and determine a sub-APP whose usage frequency information is sorted at the forefront as the to-be-loaded sub-APP; and
a second generation unit configured to generate application loading information which includes the identifier information about the to-be-loaded sub-APP and store the application loading information in a designated directory of the terminal; and
the acquisition module is specifically configured to:
read from the designated directory of the terminal the application loading information which corresponds to the main APP and includes the identifier information about the to-be-loaded sub-APP.

12. The apparatus according to claim 8, wherein the loading module comprises:
a third determination unit configured to determine the to-be-loaded sub-APP in the process of starting the main APP, according to the identifier information about the to-be-loaded sub-APP included in the acquired application loading information;
a judgment unit configured to judge whether the terminal has an installation directory of the to-be-loaded sub-APP;
a path acquisition unit configured to acquire storage path information which corresponds to the installation directory of the to-be-loaded sub-APP when the terminal has the installation directory of the to-be-loaded sub-APP; and
an application loading unit configured to, based on the acquired storage path information, call a file in the installation directory of the to-be-loaded sub-APP in the main APP and load the to-be-loaded sub-APP.

13. The apparatus according to claim 8, wherein the apparatus further comprises:
an installation module configured to acquire an installation package which corresponds to the to-be-loaded sub-APP and install the package on the terminal if the terminal does not have an installation directory of the to-be-loaded sub-APP; and
a path information storage unit configured to store storage path information which corresponds to the installation directory of the to-be-loaded sub-APP into an installation directory of the main APP.
